# EUROPÄISCHE PATENTSCHRIFT

(11) **EP 3 162 495 B1**
(45) Veröffentlichungstag und Bekanntmachung des Hinweises auf die Patenterteilung: **23.05.2018**
(21) Anmeldenummer: 16194359.2
(22) Anmeldetag: 18.10.2016
(51) Int. Cl.: B23P 11/02, F01L 1/047, F16B 4/00, F16D 1/08, F16H 53/02

(54) **VORRICHTUNG ZUM ERWÄRMEN MEHRERER FUNKTIONSELEMENTE**
DEVICE FOR HEATING A PLURALITY OF FUNCTIONAL ELEMENTS
DISPOSITIF DE CHAUFFAGE DE PLUSIEURS ÉLÉMENTS FONCTIONNELS

(30) Priorität: 27.10.2015 DE 102015220979
(43) Veröffentlichungstag der Anmeldung: 03.05.2017
(73) Patentinhaber: Mahle International GmbH, 70376 Stuttgart (DE); Maschinenbau-Service- Automatisierungstechnik Chemnitz GmbH, 09116 Chemnitz (DE)
(72) Erfinder: MENONNA, Antonio, 71254 Ditzingen (DE); MORGENSTERN, Stefan, 09577 Niederwiesa (DE); SCHACHERER, Roland, 78187 Geisingen (DE)
(74) Vertreter: BRP Renaud & Partner mbB Rechtsanwälte Patentanwälte Steuerberater

(56) Entgegenhaltungen:
- EP-A1- 2 756 917
- WO-A1-2014/111472
- DE-A1-102004 049 272
- DE-A1-102008 064 194
- DE-A1-102013 211 702
- JP-A- H11 210 413
- JP-A- 2000 061 749
- JP-A- 2000 073 709

## Beschreibung

Die vorliegende Erfindung betrifft eine Vorrichtung zum Erwärmen mehrerer, jeweils eine Ausnehmung für eine Welle aufweisender Funktionselemente, insbesondere Nocken, Ausgleichsmassen, Zahnräder und/oder Lager. Eine solche Vorrichtung ist aus der DE 10 2013 211702 A1 bekannt. Die Erfindung betrifft außerdem ein Verfahren zum Erwärmen derartiger Funktionselemente mittels einer solchen Vorrichtung. Zum Fügen von Funktionselementen, insbesondere von Nocken, auf einer Welle, insbesondere auf einem Nockenwellenrohr, müssen die Funktionselemente üblicherweise erwärmt und die Naben bzw. Ausnehmungen der einzelnen Funktionselemente zur Achse der Welle ausgerichtet werden. Sollen gleichzeitig mehrere Funktionselemente in einem Rutsch durch Einführen der Welle gefügt werden, müssen sämtliche Funktionselemente entsprechend ausgerichtet werden.

Aus der DE 10 2008 064 194 A1 ist eine hierfür geeignete Vorrichtung zur Positionierung mehrerer eine Ausnehmung für eine Welle aufweisender Funktionselemente, insbesondere Nocken, in einer vorbestimmten Winkelposition auf der Welle bekannt, wobei die Vorrichtung mehrere für jeweils ein Funktionselement bestimmte Aufnahmen aufweist. Die Aufnahmen sind dabei derart positionierbar, dass die Ausnehmungen der Funktionselemente im Wesentlichen auf einer gemeinsamen Geraden liegen.

Mittels der zuvor beschriebenen Vorrichtung werden üblicherweise auch Nockenwellen hergestellt, wobei die Nocken bzw. generell Funktionselemente mittels thermischem Fügen auf einem Wellenrohr fixiert werden. Ein derartiger thermischer Fügeprozess bedingt jedoch ein Erhitzen der zu fügenden Funktionselemente und/oder ein Abkühlen des Wellenrohres. Besonders das Erhitzen der Funktionselemente, welches üblicherweise angewandt wird, erfordert viel Heizenergie, wodurch der Herstellungsprozess für ein derartiges Produkt zunehmend teurer wird.

Die vorliegende Erfindung beschäftigt sich mit dem Problem, eine Vorrichtung zum Erwärmen mehrerer Funktionselemente auf einer Welle anzugeben, die insbesondere eine Energieeinsparung und einen verbesserten Arbeitsablauf ermöglicht.

Dieses Problem wird erfindungsgemäß durch durch die Gegenstände der Ansprüche 1 und 8 gelöst. Vorteilhafte Ausführungsformen sind Gegenstand der abhängigen Ansprüche.

Die vorliegende Erfindung beruht auf dem allgemeinen Gedanken, eine Induktionsheizung zum Aufheizen von mittels eines thermischen Fügeverfahrens auf einer Welle zu fügenden Funktionselementen derart auszubilden, dass diese vorzugsweise ausschließlich die zu erhitzenden Funktionselemente erhitzt bzw. erwärmt und nicht weitere Baukomponenten, wie beispielsweise Haltebalkone, aufweichen die Funktionselemente aufliegen. Durch die konzentrierte und lokale Erwärmung bzw. Erhitzung ausschließlich der Funktionselemente kann eine massive Energieeinsparung erreicht werden, da die bislang in unnötiger Weise für die Erwärmung anderer Bauteile der Vorrichtung, beispielsweise der Haltebalkone, erforderliche Heizenergie nun nicht mehr anfällt. Die erfindungsgemäße Vorrichtung zum Erwärmen mehrerer, jeweils eine Ausnehmung für eine Welle aufweisender Funktionselemente, beispielsweise Nocken, Ausgleichsmassen, Zahnräder und/oder Lager, weist dabei die zuvor erwähnten, jeweils für ein Funktionselement bestimmten Haltebalkone auf, die vertikal übereinander angeordnet sind und auf welchen die zu fügenden Funktionselemente zum Erwärmen aufgelegt werden. Die erfindungsgemäße Vorrichtung weist darüber hinaus mehrere Arbeitsstationen auf, nämlich zumindest eine Beladestation, zumindest eine Heizstation und zumindest eine Entladestation. Darüber hinaus sind die Haltebalkone einzeln in z-Richtung zueinander verstellbar, wobei die Haltebalkone in der Beladestation und in der Entladestation einen größeren Abstand zueinander aufweisen als in der zumindest einen Heizstation und dadurch sowohl in der Beladestation als auch in der Entladestation leichter gegriffen werden können. Zum Erwärmen der Funktionselemente ist eine Induktionsheizeinrichtung vorgesehen ist, die für jedes zu erhitzende Funktionselement eine eigene Aufnahme aufweist und die eine der Anzahl der Haltebalkone entsprechende Anzahl an Aufnahmen aufweist, die gemeinsam in z-Richtung verstellbar sind. An den Haltebalkonen kann selbstverständlich eine Greifeinrichtung angeordnet sein, welche die zu erwärmenden Funktionselemente während dem Erwärmen fixiert. Durch eine derart speziell gestaltete Induktionsheizeinrichtung mit den individuell jedem der einzelnen Funktionselemente zugeordneten Aufnahmen, ist eine äußerst zielgerichtete Erwärmung bzw. Erhitzung der zu Funktionselemente möglich, ohne dass dabei zugleich der Haltebalkon, auf welchem das zu erhitzende Funktionsbauteil aufliegt, mit erhitzt wird. Die erfindungsgemäße Induktionsheizeinrichtung mit ihren Aufnahmen ermöglicht somit eine Erwärmung ausschließlich der Funktionselemente und eben nicht wie bisher zusätzlicher Bauteile der Vorrichtung, welche für den eigentlichen späteren Fügevorgang keinerlei Bedeutung haben, jedoch einen erhöhten Energiebedarf erfordern. Mit der erfindungsgemäßen Vorrichtung ist es somit möglich, durch Auseinanderfahren der einzelnen Haltebalkone in der Beladestation und der Entladestation die Funktionselemente vereinfacht zu Greifen und dadurch den Arbeitsablauf zu verbessern und durch die lokalisierte Erwärmung der Funktionselemente Energie einzusparen.

Die Aufnahmen der Induktionsheizeinrichtung könne dabei derart ausgebildet sein, dass das jeweils darin zu erhitzende Funktionselement vorzugsweise passgenau bzw. mit lediglich geringem Spiel in einer solchen Aufnahme aufgenommen werden kann, wobei die jeweilige Aufnahme zudem derart ausgebildet ist, dass sie das zu erhitzende Funktionselement gleichmäßig erhitzt, so dass beispielsweise durch Bereiche mit größerer Materialdicke höhere Induktionsströme geleitet werden, so dass das erhitzte Funktionselement bei einem Abkühlvorgang möglichst gleichmäßig auf die Welle schrumpft. Die Aufnahmen können dabei selbstverständlich auch eine nicht passgenaue Aufnahme des zu erhitzenden Funktionselements ermöglichen, insbesondere wen sie als Ringinduktor ausgebildet sind, wobei dies den großen Vorteil bietet, dass mit ein und derselben Aufnahme unterschiedlich große Funktionselemente erhitzt werden können, wodurch sich die Flexibilität hinsichtlich der zu erhitzenden Funktionselemente erhöht. Mit der erfindungsgemäßen Induktionsheizeinrichtung und über diese auch mit der erfindungsgemäßen Vorrichtung ist somit eine deutliche Energieeinsparung beim thermischen Fügen von Steuerwellen, beispielsweise Nockenwellen, möglich, wodurch die Herstellungskosten für eine solche Steuerwelle deutlich gesenkt und zudem Ressourcen geschont werden können.

Bei einer vorteilhaften Weiterbildung der erfindungsgemäßen Lösung ist in jeder Aufnahme zumindest eine Induktionsspule, beispielsweise ein Ringinduktor, angeordnet. Dies ermöglicht es, die Aufnahmen individuell zu steuern, insbesondere zu- und abzuschalten sowie die Heizleistung individuell zu regeln. Durch das Vorsehen mehrerer Induktionsspulen ist auch die Schaffung von unterschiedlichen Temperaturbereichen beim Aufheizen in einer Aufnahme möglich.

Zweckmäßig ist die Vorrichtung als Rundtakter ausgebildet und weist einen Drehtisch mit vier Arbeitsstationen auf. Eine erste und eine zweite Arbeitsstation können dabei als Beladestation ausgebildet sein, wogegen eine dritte Arbeitsstation die Heizstation darstellt und eine vierte Arbeitsstation als Entladestation ausgebildet ist. Die erste und zweite Arbeitsstation können selbstverständlich auch zusammengefasst sein, so dass in diesem Fall die als Rundtakter ausgebildete Vorrichtung lediglich drei Stationen aufweisen würde. In den Beladestationen werden zunächst die zu erwärmenden Funktionselemente mittels eines entsprechenden Roboters aus einem Magazin entnommen und auf den jeweiligen Haltebalkonen der Vorrichtung abgelegt. Hierbei sind die jeweils zu beladenden Haltebalkone auseinandergefahren und ermöglichen dadurch ein vereinfachtes Ablegen des Funktionselements. Sind die Funktionselemente in gewünschter Anzahl auf den jeweiligen Haltebalkonen abgelegt, fahren die Haltebalkone in z-Richtung wieder zusammen und der Drehtisch wird verdreht, so dass nunmehr die Funktionselemente von der Beladestation zur Heizstation verstellt werden, in welcher die in den vorherigen Absätzen beschriebene Induktionsheizeinrichtung mit den Aufnahmen in Wartestellung steht. Das Zusammenfahren der Haltebalkone in der Heizstation hat den großen Vorteil, dass diese kompakter und damit energieeffizienter gestaltet werden kann. Wenn der Rundtakter die Funktionselemente (Nocken) in die Heizstation geschwenkt hat, fahren die Induktionsspulen näher an die Nocken heran bzw. in einer Ausführung als Ringinduktor fahren die kreisrunden Spulen über die Nocken, bis auf Mitte Nockenhöhe. Nach dem Erwärmen fahren die Spulen (Induktionsheizeinrichtung) wieder in z-Richtung nach oben zurück, woraufhin die Nocken in die richtige z-Lage gefahren und dann in die Entladestation getaktet werden. Dort werden sie gemeinsam durch eine Vorrichtung entnommen und in eine Fügevorrichtung transferiert. Das sich daran anschließende thermische Fügen in der separaten Fügevorrichtung, erfolgt dabei selbstverständlich lediglich dann, sofern die erfassten Temperaturwerte vordefinierte Grenzwerte nicht unter- oder überschreiten bzw. innerhalb einer vordefinierten Temperaturspanne liegen.

Die vorliegende Erfindung beruht somit ebenfalls auf dem allgemeinen Gedanken, ein energiesparendes Verfahren zum Erwärmen von Funktionselementen anzugeben, bei welchem die zuvor beschriebene Vorrichtung eingesetzt wird, die eine äußerst zielgerichtete Erhitzung der Funktionselemente ermöglicht, ohne dass weitere Komponenten unnötiger Weise miterwärmt werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Dabei zeigen, jeweils schematisch
- Fig. 1: eine Draufsicht auf einer erfindungsgemäße Vorrichtung,
- Fig. 2a-2c: unterschiedliche Prozessschritte beim Fertigen einer Steuerwelle.

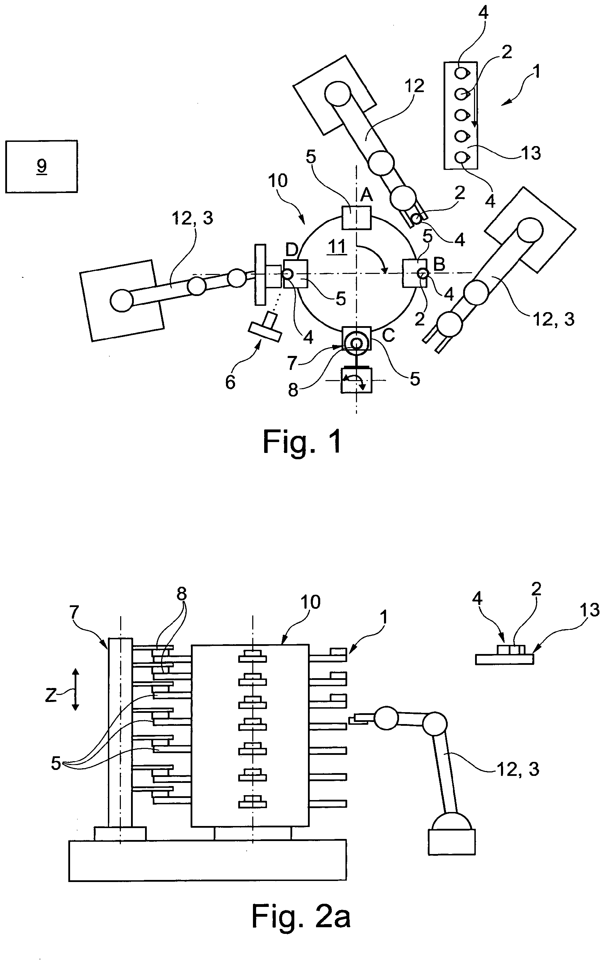

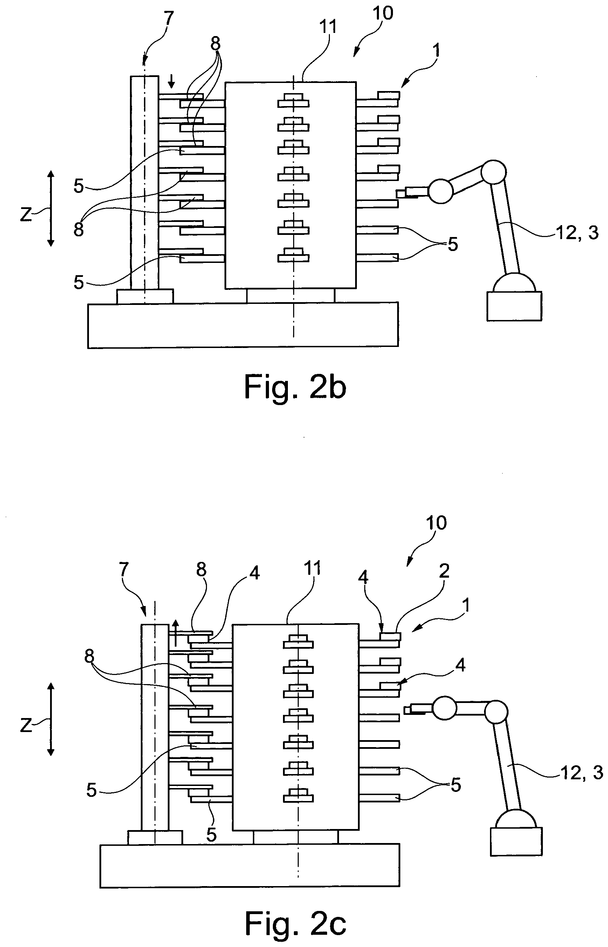

Entsprechend den Fig. 1 und 2, weist eine erfindungsgemäße Vorrichtung 1 zum Erwärmen mehrerer, jeweils einer Ausnehmung 2 für eine Welle 3 aufweisender Funktionselemente 4, beispielsweise Nocken, Ausgleichsmassen, Zahnräder und/oder Lager, mehrere für jeweils ein Funktionselement 4 bestimmte Haltebalkone 5 auf, die vertikal übereinander angeordnet sind, wie dies eindeutig den Fig. 2a-2c zu entnehmen ist. Erfindungsgemäß weist die Vorrichtung 1 mehrere Arbeitsstationen A, B, C, D aufweist (vgl. Fig. 1), nämlich zumindest eine Beladestation A, B, zumindest eine Heizstation C und eine Entladestation D. Selbstverständlich können auch nur drei oder mehr als vier Arbeitsstationen vorgesehen sein. Die Haltebalkone 5 sind einzeln in z-Richtung, das heißt vertikal, verstellbar, wobei die Haltebalkone 5 in der Beladestation A, B und in der Entladestation D einen größeren Abstand zueinander aufweisen als in der zumindest einen Heizstation C. Zudem ist eine Induktionsheizeinrichtung 7 vorgesehen, die für jedes zu erhitzende Funktionselement 4 eine eigene Aufnahme 8 aufweist, die gemeinsam in z-Richtung verstellbar sind. Eine Innenkontur der jeweiligen Aufnahme 8 kann dabei im Wesentlichen komplementär zu einer Außenkontur des jeweils zu erhitzenden Funktionselements 4 ausgebildet sein, so dass jedes Funktionselement 4 zum induktiven Erwärmen in einer zugehörigen Aufnahme 8, insbesondere passgenau oder mit wenig Spiel, aufgenommen werden kann (vgl. auch Fig. 3). Selbstverständlich können dabei im einfachsten Ausführungsfall die Aufnahmen 8 auch als Induktionsringe ausgebildet sein, welche über das zu erhitzende bzw. zu erwärmende Funktionselement 4 stülpbar sind, jedoch nicht exakt passgenau an einer Außenkontur derselben anliegen. Dies bietet den großen Vorteil, dass mit solchen Aufnahmen unterschiedliche Funktionselemente erhitzt werden können.

Die Induktionsheizeinrichtung 7 weist dabei eine der Anzahl der Haltebalkone 5 entsprechende Anzahl an Aufnahmen 8 auf, die vorzugsweise gemeinsam, d.h. simultan, verstellbar sind. In jeder dieser Aufnahmen 8 ist zumindest eine Induktionsspule angeordnet, welche ein induktives Erwärmen des darin aufgenommenen Funktionselements 4 ermöglicht. Selbstverständlich können je Aufnahme 8 auch mehrere Induktionsspulen angeordnet sein, wodurch eine bereichsweise unterschiedliche Erwärmung der Funktionselemente 4 möglich wäre.

Betrachtet man die Fig. 1 und 2, so kann man erkennen, dass die Vorrichtung 1 als Rundtakter 10 ausgebildet ist und einen Drehtisch 11 mit vier Arbeitsstationen A, B, C und D aufweist. Im vorliegenden Fall sind eine erste und eine zweite Arbeitsstation A, B als Beladestation ausgebildet, so dass dort die jeweiligen Haltebalkone 5 mittels entsprechender Beladeeinrichtungen 12, beispielsweise Roboter 3, mit aus einem Magazin 13 entnommenen Funktionselementen 4 belegt werden. Die beiden Beladestationen A, B können dabei selbstverständlich auch in einer einzigen Station zusammengefasst werden, so dass in diesem Fall der Drehtisch 11 lediglich drei Arbeitsstationen aufweisen würde. Die Funktionselemente 4 sind in den Haltebalkonen 5 in der mindestens einen Entladestation D in z-Richtung und der Winkelausrichtung entsprechend der späteren Fügeposition ausgerichtet.

Rein theoretisch kann die Vorrichtung 1 auch als Rundtakter 10 ausgebildet sein und fünf Arbeitsstationen aufweisen, wovon zumindest zwei Arbeitsstationen als Beladestationen (A, B) oder als Heizstationen (C) ausgebildet sind. Auch bei einem Rundtakter mit vier Arbeitsstationen (A, B, C, D) können zwei Heizstationen (C), nämlich eine Vorheizstation und eine Hauptheizstation, vorgesehen sein.

Darüber hinaus weist die erfindungsgemäße Vorrichtung 1 eine Messeinrichtung 6 (vgl. Fig. 1), insbesondere eine Infrarotmesseinrichtung, auf, mittels welcher eine Temperatur der Funktionselemente 4 bestimmbar ist. Ob der sich anschließende thermische Fügevorgang dann durchgeführt wird, hängt von den von der Messeinrichtung 6 ermittelten Temperaturwerten ab, so dass ein qualitativ nicht einwandfreier Fügevorgang aufgrund von abweichenden Temperaturen unterbunden werden kann.

Generell erfolgt dabei das Erwärmen der jeweils eine Ausnehmung 2 aufweisenden Funktionselemente 4, beispielsweise Nocken, Ausgleichsmassen, Zahnräder, und/oder Lager, mittels der Vorrichtung 1 wie folgt:
Zunächst wird die erfindungsgemäße Vorrichtung 1 entsprechend der Fig. 2a in den Arbeitsstationen A und B mittels einer entsprechenden Beladeeinrichtung 12, beispielsweise einem Roboter 3, beladen, indem die zu erwärmenden Funktionselemente 4 von diesen aus dem Magazin 13 entnommen und auf die entsprechenden Haltebalkone 5 der Vorrichtung 1, d.h. im vorliegenden Fall des Drehtisches 11, gelegt werden. Dort werden sie selbstverständlich mittels einer nicht gezeigten Fixiereinrichtung, beispielsweise einer Greifeinrichtung, entsprechend fixiert, insbesondere hinsichtlich ihrer Drehwinkellage. Wie der Fig. 2a dabei eindeutig zu entnehmen ist, weist der mit dem jeweiligen Funktionselement 4 zu beladende Haltebalkon 5 einen größeren Vertikalabstand, das heißt einen Abstand in z-Richtung zu einem benachbarten Haltebalkon 5 auf, als die übrigen Haltebalkone 5, um das Einlegen des Funktionselements 4 zu erleichtern.

Gemäß der Fig. 2b, erfolgt weiterhin das Beladen der Haltebalkone 5 mit den zu erwärmenden Funktionselemente 4 durch die Beladeeinrichtung 12, wobei in der Arbeitsstation C gleichzeitig die Aufnahmen 8 der Induktionsheizeinrichtung 7 simultan nach unten gefahren, wodurch die auf den Haltebalkonen 5 abgelegten Funktionselemente 4 in die Aufnahmen 8 der Induktionsheizeinrichtung 7 eintreten. In diesem Stadium erfolgt nun ein Beheizen der Funktionselemente 4 und erfindungsgemäß eben nur der Funktionselemente 4 und nicht zusätzlich und in unerwünschter Weise der Haltebalkone 5. Vor dem verdrehen der Funktionselemente 4 in die Heizstation C, werden die Haltebalkone 5 in z-Richtung zusammengefahren, wodurch eine äußerst kompakt bauende und energieeffiziente Heizstation C geschaffen werden kann.

Ist eine vordefinierte Heizzeit bzw. eine vordefinierte einzubringende Heizleistung erreicht, werden die Aufnahmen 8 gemäß der Fig. 2c wieder simultan nach oben gefahren, wodurch die Funktionselemente 4 aus den Aufnahmen 8 heraustreten. Anschließend werden die erhitzten Funktionselemente 4 durch Verdrehen des Drehtisches 11 in die Arbeitsstation D verschwenkt und dort entnommen und einer weiteren Fügevorrichtung 9 zugeführt. Beim Verdrehen des Drehtisches 11 in die Entladestation D, werden die Haltebalkone 5 wieder in z-Richtung, das heißt in Hochrichtung, auseinander gefahren, wodurch der Roboter 3 die erhitzten Funktionselemente 4 leichter entnehmen kann. Dabei können alle Haltebalkone 5 gleichzeitig auseinander gefahren werden, oder aber nur derjenige, auf dem das zu entnehmende Funktionselement 4 liegt.

## Patentansprüche

1. Vorrichtung (1) zum Erwärmen mehrerer, jeweils eine Ausnehmung (2) für eine Welle (3) aufweisender Funktionselemente (4), insbesondere Nocken, Ausgleichsmassen, Zahnräder und/oder Lager, wobei
- die Vorrichtung (1) mehrere für jeweils ein Funktionselement (4) bestimmte Haltebalkone (5) aufweist, die übereinander angeordnet sind,
- die Vorrichtung (1) mehrere Arbeitsstationen (A,B,C,D) aufweist, nämlich zumindest eine Beladestation (A, B), zumindest eine Heizstation (C) und zumindest eine Entladestation (D),
- die Haltebalkone (5) einzeln in z-Richtung relativ zueinander verstellbar sind,
- die Haltebalkone (5) in der zumindest einen Beladestation (A, B) und in der zumindest einen Entladestation (D) einen größeren Abstand in z-Richtung zueinander aufweisen als in der zumindest einen Heizstation (C),
- eine Induktionsheizeinrichtung (7) vorgesehen ist, die für jedes zu erhitzende Funktionselement (4) eine eigene Aufnahme (8) aufweist und die eine der Anzahl der Haltebalkone (5) entsprechende Anzahl an Aufnahmen (8) aufweist, die gemeinsam in z-Richtung verstellbar sind.

2. Vorrichtung nach Anspruch 1,
**dadurch gekennzeichnet,**
**dass** in jeder Aufnahme (8) zumindest eine Induktionsspule angeordnet ist.

3. Vorrichtung nach Anspruch 1 oder 2,
**dadurch gekennzeichnet,**
**dass** die Vorrichtung (1) als Rundtakter (10) ausgebildet ist und einen Drehtisch (11) mit insbesondere vier Arbeitsstationen (A, B, C, D) aufweist.

4. Vorrichtung nach Anspruch 3,
**dadurch gekennzeichnet,**
**dass** die Vorrichtung (1) als Rundtakter (10) ausgebildet ist und vier Arbeitsstationen (A, B, C, D) aufweist, wovon zumindest zwei Arbeitsstationen als Beladestationen (A, B) ausgebildet sind.

5. Vorrichtung nach einem der Ansprüche 1 bis 4,
**dadurch gekennzeichnet,**
**dass** eine Innenkontur der jeweiligen Aufnahme (8) im Wesentlichen komplementär zu einer Außenkontur des jeweils zu erhitzenden Funktionselements (4) ausgebildet ist, so dass jedes Funktionselement (4) zum induktiven Erwärmen in einer zugehörigen Aufnahme (8) anordenbar ist.

6. Vorrichtung nach einem der vorherigen Ansprüche,
**dadurch gekennzeichnet,**
**dass** zumindest eine Beladeeinrichtung (12), insbesondere ein Roboter (3), zum Beladen der Haltebalkone (5) mit Funktionselementen (4) vorgesehen ist.

7. Vorrichtung nach einem der vorherigen Ansprüche,
**dadurch gekennzeichnet,**
**dass** eine Messeinrichtung (6), insbesondere eine Infrarotmesseinrichtung, zur Bestimmung der Temperatur der Funktionselemente (4) vor dem Fügen vorgesehen ist.

8. Verfahren zum Erwärmen mehrerer jeweils eine Ausnehmung (2) aufweisender Funktionselemente (4), insbesondere Nocken, Ausgleichsmassen, Zahnräder und/oder Lager, mittels einer Vorrichtung (1) nach einem der Ansprüche 1 bis 7, zur Vorbereitung eines späteren thermischen Fügeprozesses, bei dem
- die Funktionselemente (4) in der zumindest einen Beladestation (A,B) in die vertikal übereinander angeordneten und in z-Richtung auseinander gefahrenen Haltebalkone (5) eingelegt werden,
- die Funktionselemente (4) in z-Richtung zusammengefahren, in die zumindest eine Heizstation (C) verstellt und dort induktiv in den Aufnahmen (8) erwärmt werden, wobei zum Erwärmen über jedes Funktionselement (4) eine zugehörige Aufnahme (8) der Induktionsheizeinrichtung (7) gestülpt wird,
- eine Temperatur der Funktionselemente (4) gemessen wird,
- die Aufnahmen (8) von den zugehörigen Funktionselementen (4) abgehoben werden,
- die Funktionselemente (4) in die zumindest eine Entladestation (D) verstellt, insbesondere verschwenkt, und die Haltebalkone (5) auseinandergefahren und in der Endladestation (D) entnommen werden.

## Revendications

1. Dispositif (1) pour le chauffage de plusieurs éléments fonctionnels (4) présentant respectivement un évidement (2) pour un arbre (3), en particulier cames, masses de compensation, roues dentées et/ou paliers, dans lequel
- le dispositif (1) présente plusieurs balcons de retenue (5) destinés à respectivement un élément fonctionnel (4) qui sont agencés les uns au-dessus des autres,
- le dispositif (1) présente plusieurs postes de travail (A, B, C, D), à savoir au moins un poste de chargement (A, B), au moins un poste de chauffage (C) et au moins un poste de déchargement (D),
- les balcons de retenue (5) sont réglables individuellement en direction z les uns par rapport aux autres,
- les balcons de retenue (5) présentent dans l'au moins un poste de chargement (A, B) et dans l'au moins un poste de déchargement (D) une distance plus grande en direction z les uns par rapport aux autres que dans l'au moins un poste de chauffage (C),
- un dispositif de chauffage par induction (7) est prévu, lequel présente pour chaque élément fonctionnel (4) à chauffer un propre logement (8) et lequel présente un nombre correspondant au nombre des balcons de retenue (5) de logements (8) qui sont réglables en commun en direction z.

2. Dispositif selon la revendication 1,
**caractérisé en ce que**
au moins une bobine d'induction est agencée dans chaque logement (8).

3. Dispositif selon la revendication 1 ou 2,
**caractérisé en ce que**
le dispositif (1) est réalisé comme générateur de déclenchement rond (10) et présente une table tournante (11) avec en particulier quatre postes de travail (A, B, C, D).

4. Dispositif selon la revendication 3,
**caractérisé en ce que**
le dispositif (1) est réalisé comme générateur de déclenchement rond (10) et présente quatre postes de travail (A, B, C, D), dont au moins deux postes de travail sont réalisés comme postes de chargement (A, B).

5. Dispositif selon l'une quelconque des revendications 1 à 4,
**caractérisé en ce que**
un contour intérieur du logement respectif (8) est réalisé de manière sensiblement complémentaire à un contour extérieur de l'élément fonctionnel (4) à chauffer respectivement de sorte que chaque élément fonctionnel (4) puisse être agencé pour le chauffage par induction dans un logement (8) afférent.

6. Dispositif selon l'une quelconque des revendications précédentes,
**caractérisé en ce que**
au moins un dispositif de chargement (12), en particulier un robot (3), est prévu pour le chargement des balcons de retenue (5) avec des éléments fonctionnels (4).

7. Dispositif selon l'une quelconque des revendications précédentes,
**caractérisé en ce que**
un dispositif de mesure (6), en particulier un dispositif de mesure infrarouge, est prévu pour la détermination de la température des éléments fonctionnels (4) avant l'assemblage.

8. Procédé de chauffage de plusieurs éléments fonctionnels (4) présentant respectivement un évidement (2), en particulier cames, masses de compensation, roues dentées et/ou paliers, au moyen d'un dispositif (1) selon l'une quelconque des revendications 1 à 7, pour la préparation d'un processus d'assemblage thermique ultérieur, pour lequel
- les éléments fonctionnels (4) sont introduits dans l'au moins un poste de chargement (A, B) dans les balcons de retenue (5) agencés verticalement les uns au-dessus des autres et sortis les uns des autres en direction z,
- les éléments fonctionnels (4) sont rentrés en direction z, sont réglés dans l'au moins un poste de chauffage (C) et y sont chauffés par induction dans les logements (8), dans lequel pour le chauffage par le biais de chaque élément fonctionnel (4) un logement (8) afférent du dispositif de chauffage par induction (7) est rabattu,
- une température des éléments fonctionnels (4) est mesurée,
- les logements (8) sont relevés des éléments fonctionnels (4) afférents,
- les éléments fonctionnels (4) sont réglés dans l'au moins un poste de déchargement (D), en particulier pivotés, et les balcons de retenue (5) sont sortis les uns des autres et sont retirés dans le poste de déchargement (D).

## Claims

1. Device (1) for heating a plurality of functional elements (4), in particular cams, balancing masses, gearwheels and/or bearings, each of said elements comprising a cutout (2) for a shaft (3), wherein
- the device (1) has a plurality of holding balconies (5) disposed above one another each associated with a respective functional element (4),
- the device (1) has a plurality of work stations (A, B, C, D), namely at least one loading station (A, B), at least one heating station (C) and at least one unloading station (D),
- the holding balconies (5) are individually adjustable relative to each other in the z direction;
- the holding balconies (5) in the at least one loading station (A, B) and in the at least one unloading station (D) have a greater spacing from one another in the z direction than in the at least one heating station (C),
- an induction heating device (7) is provided, which has an individual accommodation element (8) for each functional element (4) to be heated and which has a number of accommodation elements (8) corresponding to the number of holding balconies (5), which are jointly adjustable in the z direction.

2. Device according to claim 1,
**characterised in that**
at least one induction coil is disposed in, each of the accommodation elements (8).

3. Device according to claim 1 or 2,
**characterised in that**
the device (1) is configured as a rotary transfer system (10) and has a rotary table (11) with in particular four work stations (A, B, C, D).

4. Device according to claim 3,
**characterised in that**
the device (1) is configured as a rotary transfer system (10) and has four work stations (A, B, C, D), of which at least two work stations are configured as loading stations (A, B).

5. Device according to any one of claims 1 to 4,
**characterised in that**
an inner contour of the respective accommodation element (8) is structured substantially complementary to an outer contour of the respective functional element (4) to be heated, so that each functional element (4) can be disposed in an associated accommodation element (8) for inductive heating.

6. Device according to any one of the preceding claims,
**characterised in that**
at least one loading device (12), in particular a robot (3), is provided for loading the holding balconies (5) with functional elements (4).

7. Device according to any one of the preceding claims,
**characterised in that**
a measuring device (6), in particular an infrared measuring device, is provided for determining the temperature of the functional elements (4) before the jointing process.

8. Method for heating a plurality of functional elements (4) in particular cams, balancing masses, gearwheels and/or bearings, each of said elements comprising a cutout (2), by means of a device (1) according to any one of claims 1 to 7 in preparation for a subsequent jointing process in which
- the functional elements (4) in the at least one loading station (A, B) are placed in the holding balconies (5) disposed vertically above one another and moved apart in the z direction,
- the functional elements (4) are moved together in the z direction, displaced into the at least one heating station (C) and inductively heated there in the accommodation elements (8), wherein an associated accommodation element (8) of the induction heating device (7) is placed over each functional element (4) for heating,
- a temperature of the functional elements (4) is measured,
- the accommodation elements (8) are removed from the associated functional elements (4),
- the functional elements (4) are displaced, in particular swivelled, into the at least one unloading station (D), and the holding balconies (5) are moved apart and removed to the unloading station (D).
